(19) **Europäisches Patentamt**

**European Patent Office**

**Office européen des brevets**

(11) **EP 1 594 267 A2**

(12) **EUROPEAN PATENT APPLICATION**

(43) Date of publication:
**09.11.2005 Bulletin 2005/45**

(51) Int Cl.⁷: **H04L 12/56**, H04B 7/005

(21) Application number: **05009840.9**

(22) Date of filing: **04.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **06.05.2004 KR 2004031866**

(71) Applicant: **SAMSUNG ELECTRONICS CO., LTD.**
**Suwon-city, Gyeonggi-do (KR)**

(72) Inventors:
• **Heo, Youn-Hyoung**
  **Samsung Electronics Co., Ltd.**
  **Suwon-si Gyeonggi-do (KR)**
• **Lee, Ju-Ho Samsung Electronics Co., Ltd.**
  **Suwon-si Gyeonggi-do (KR)**

• **Lee, Kook-Heul Samsung Electronics Co., Ltd.**
  **Suwon-si Gyeonggi-do (KR)**
• **Choi, Sung-Ho Samsung Electronics Co., Ltd.**
  **Suwon-si Gyeonggi-do (KR)**
• **Cho, Joon-Young Samsung Electronics Co., Ltd.**
  **Suwon-si Gyeonggi-do (KR)**
• **Kim, Young-Bum Samsung Electronics Co., Ltd.**
  **Suwon-si Gyeonggi-do (KR)**
• **Kwak, Yong-Jun Samsung Electronics Co., Ltd.**
  **Suwon-si Gyeonggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Method and apparatus for setting power for transmitting signaling information on an e-dch**

(57) Disclosed is a power setup method for minimizing a delay time caused by an HARQ of an E-DCH when an MAC-e PDU comprising scheduling information required for using a Node B controlled scheduling is transmitted in environments supporting a packet data service through the E-DCH in an asynchronous code division multiple access (CDMA) communication system. A user equipment (UE) generates packet data for transmitting through the E-DCH, determines if signaling information is included in Quality of Service (QoS) of the packet data and the packet data, sets a power gain preset according to each QoS of the packet data, applies a determined offset value to the set power gain when the signaling information is included in the packet data, and transmits the packet data through the E-DCH according to the power gain to which the offset value has been applied.

FIG.6

**Description**

**BACKGROUND OF THE INVENTION**

Field of the Invention:

The present invention relates to a cellular Code Division Multiple Access (CDMA) communication system. More particularly, the present invention relates to a method and an apparatus for setting a power gain in order to efficiently transmit signaling information by means of an Enhanced Uplink Dedicated Channel (EUDCH or E-DCH).

Description of the Related Art:

A Universal Mobile Telecommunication Service (UMTS) system (3G mobile communication system) using a wideband Code Division Multiple Access (CDMA) based on Global System for Mobile communications (GSM) and General Packet Radio Services (GPRS), which are mobile communication systems used in Europe, provides a consistent service capable of transmitting packet-based texts, digitalized voice, or video and multimedia data at a high speed of more than 2 Mbps regardless of global positions of mobile phones or computer users. A UMTS uses a concept of a virtual connection implying a connection of a packet switching scheme utilizing a packet protocol such as an Internet Protocol (IP), and may always connect to any other endpoints in a network.

In particular, a UMTS system uses an E-DCH in order to improve performance of packet transmission in communication (i.e., Uplink (UL) communication) from a User Equipment (UE) to a Base Station (BS or Node B). An E-DCH supports a technology such as an Adaptive Modulation and Coding (AMC), a Hybrid Automatic Retransmission Request (HARQ) and a Node B controlled Scheduling in order to support more stable high speed data transmission.

An AMC is a technology for improving use efficiency of resources by determining a modulation scheme and a coding scheme of a data channel according to channel conditions between a Node B and a UE. A combination of a modulation scheme and a coding scheme is called a Modulation and Coding Scheme (MCS) and various levels (MCS levels) of a MCS may be defined according to supportable modulation schemes and coding schemes. An AMC adaptively determines the MCS levels according to channel conditions between a UE and a Node B, thereby improving the efficiency of resources.

According to a Node B controlled Scheduling, a Node B determines if uplink data are transmitted and the upper limit of an available data rate when data are transmitted using an E-DCH and transmits the determined information to a UE as scheduling assignment information, and the UE determines an available data rate of an uplink E-DCH with reference to the scheduling assignment information and transmits the data.

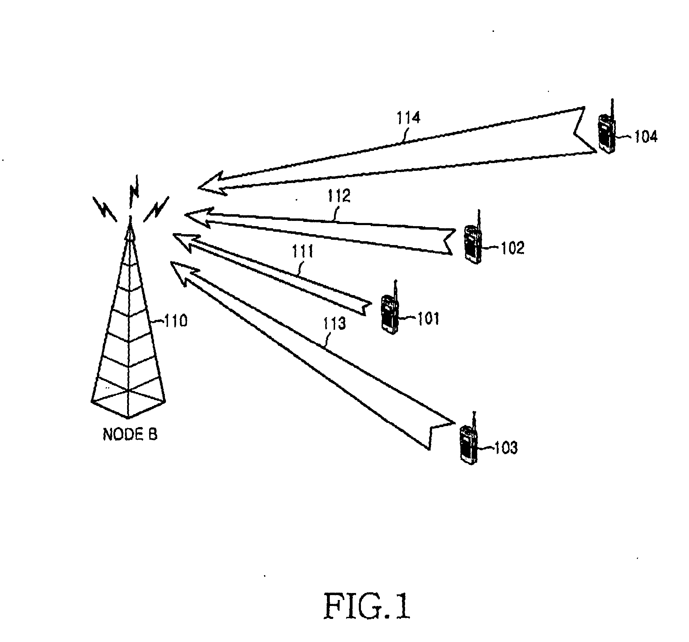

FIG. 1 is a diagram illustrating uplink packet transmission through an E-DCH in a conventional wireless communication system. In FIG. 1, a reference number 110 represents a BS supporting the E-DCH, that is, a Node B, and reference numbers 101 to 104 represent UEs using the E-DCH. Each of the UEs 101 to 104 transmits data to the Node B 110 through the E-DCHs 111 to 114.

The Node B 110 informs each UE if E-DCH data can be transmitted with reference to data buffer statuses, requested data rates or channel condition information of the UEs 101 to 104 using the E-DCH, or performs a scheduling operation for adjusting an E-DCH data rate. It is possible to perform the scheduling operation in such a manner that a low data rate is assigned to the UEs (e.g., 103 and 104) in a position remote from the Node B 110 and a high data rate is assigned to the UEs (e.g., 101 and 102) in a position near to the Node B 110 while preventing a measured noise rise value of the Node B 110 from exceeding a target value in order to improve performance of an entire system.

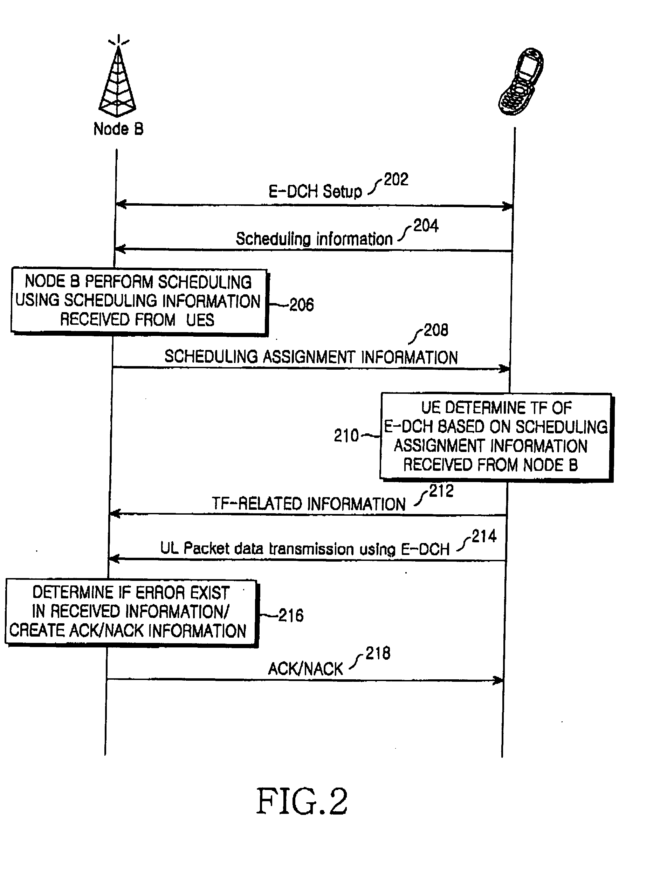

FIG. 2 is a flow diagram illustrating a conventional transmission/reception procedure through an E-DCH.

Referring to FIG. 2, in step 202, a Node B and a UE perform an E-DCH setup. Step 202 includes a transfer process of messages through a dedicated transport channel. When the E-DCH setup has been completed, the UE informs the Node B of scheduling information in step 204. The scheduling information may include UE transmit power information representing uplink channel information, extra power information capable of being transmitted by the UE, the amount of data which are stored in a buffer of the UE and must be transmitted, etc.

In step 206, the Node B having received the scheduling information from multiple UEs being in communication monitors the scheduling information of the multiple UEs in order to schedule data transmission of each UE. In particular, in step 208, the Node B permits uplink packet transmission by the UE and transmits scheduling assignment information to the UE. The scheduling assignment information includes a permitted data rate, a timing at which transmission is permitted, etc.

In step 210, the UE determines a Transport Format (TF) of an E-DCH to be transmitted through an uplink by means of the scheduling assignment information. In steps 212 and 214, the UE transmits uplink packet data to the Node B through the E-DCH together with information (TF information) for the TF. The TF information includes a Transport Format Resource Indicator (TFRI) representing information required for demodulating the E-DCH. In step 214, the UE selects an MCS level based on a data rate assigned by the Node B and channel conditions, and transmits the uplink packet data by means of the MCS level.

In step 216, the Node B determines if an error exists in the TF information and the packet data. In step 218, the Node B transmits Non-Acknowledge (NACK) information to the UE through an Acknowledge (ACK)/NACK channel when the error exists in either the TF information or the packet data. In contrast, when there is no error in both the TF information and the packet data, the Node B transmits ACK information to the UE through the ACK/NACK channel. In a case in which the ACK information is transmitted, the UE sends new user data through the E-DCH because the transmission of the packet data has been completed. In contrast, when the NACK information is transmitted, the UE retransmits the same packet data through the E-DCH.

The Node B controlled Scheduling operating as described above must be performed in a direction of improving performance of an entire system while preventing communication quality of the UEs from deteriorating. Further, the Node B must receive the exact scheduling information including buffer statuses and power statuses of the UEs in order to efficiently perform the scheduling of the E-DCHs. Accordingly, it is necessary to provide a method in which multiple UEs located in service coverage of the Node B can transmit the scheduling information to the Node B more efficiently and exactly.

## SUMMARY OF THE INVENTION

Accordingly, the present invention has been made to solve the above-mentioned problems occurring in the prior art, and it is an object of the present invention to provide a method and an apparatus for improving the efficiency of a scheduling by setting transmit power higher than that in transmitting a conventional Enhanced Uplink Dedicated Channel (E-DCH) data when a user equipment (UE) transmits scheduling information required for the scheduling through an E-DCH in a packet service through an uplink dedicated channel.

It is another object of the present invention to provide a method and an apparatus for setting transmit power of an E-DCH, which includes scheduling information, higher than that of general E-DCH data in order to minimize a delay time in transmitting scheduling information through the E-DCH.

In accordance with one aspect of the present invention, there is provided a method for transmitting signaling information for an enhanced uplink packet data service in a communication system. The method comprises the steps of generating a Media Access Control (MAC)-e Protocol Data Unit (PDU) comprising the signaling information for the enhanced uplink packet data service, which is to be transmitted through an Enhanced Uplink Dedicated Channel (E-DCH); applying a determined power offset to a first power gain corresponding to a transport format for transmitting the MAC-e PDU, thereby setting a second power gain; and transmitting the MAC-e PDU through the E-DCH by means of the second power gain.

In accordance with another aspect of the present invention, there is provided an apparatus for transmitting signaling information for an enhanced uplink packet data service in a communication system. The apparatus comprising a packet data generator for generating a Media Access Control (MAC)-e Protocol Data Unit (PDU) comprising the signaling information for the enhanced uplink packet data service, which is to be transmitted through an Enhanced Uplink Dedicated Channel (E-DCH); a gain factor determiner for applying a determined power offset to a first power gain corresponding to a transport format for transmitting the MAC-e PDU, thereby setting a second power gain; and a data channel transmitter for transmitting the MAC-e PDU through the E-DCH by means of the second power gain.

In accordance with further another aspect of the present invention, there is provided a method for transmitting signaling information for an enhanced uplink packet data service in a communication system. The method comprising the steps of generating a Media Access Control (MAC)-e Protocol Data Unit (PDU) for being transmitted through an Enhanced Uplink Dedicated Channel (E-DCH); setting a power gain corresponding to a transport format of the MAC-e PDU based on Quality of Service (QoS) of the MAC-e PDU; and transmitting the MAC-e PDU through the E-DCH by means of the set power gain.

In accordance with still another aspect of the present invention, there is provided an apparatus for transmitting signaling information for an enhanced uplink packet data service in a communication system. The apparatus comprising a packet data generator for generating a Media Access Control (MAC)-e Protocol Data Unit (PDU) to be transmitted through an Enhanced Uplink Dedicated Channel (E-DCH); a gain factor determiner for setting a power gain corresponding to a transport format of the MAC-e PDU in consideration of Quality of Service (QoS) of the MAC-e PDU; and a data channel transmitter for transmitting the MAC-e PDU through the E-DCH by means of the set power gain.

## BRIEF DESCRIPTION OF THE DRAWINGS

The above and other objects, features and advantages of the present invention will be more apparent from the following detailed description taken in conjunction with the accompanying drawings, in which:

FIG 1 is a diagram illustrating uplink packet transmission in a conventional wireless communication system;

FIG. 2 is a flow diagram schematically illustrating a conventional uplink packet service procedure;

FIG. 3 is a diagram illustrating a signaling procedure of an Enhanced Uplink Dedicated Channel (E-DCH);

FIG. 4 is a diagram showing the structure of a Media Access Control (MAC)-e PDU comprising MAC-e signaling information;

FIG. 5 is a diagram illustrating a delay of control information due to retransmission of data;

FIG. 6 is a flow diagram illustrating a procedure for transmitting E-DCH data comprising signaling information according to a first embodiment of the present invention;

FIG. 7 is a flow diagram showing an apparatus for transmitting E-DCH data comprising signaling information according to a first embodiment of the present invention;

FIG. 8 is a flow diagram showing an apparatus for receiving E-DCH data comprising signaling information according to a first embodiment of the present invention;

FIG. 9 is a flow diagram illustrating a procedure for transmitting E-DCH data comprising signaling information according to a second embodiment of the present invention;

FIG. 10 is a flow diagram showing an apparatus for transmitting E-DCH data comprising signaling information according to a second embodiment of the present invention; and

FIG. 11 is a flow diagram showing an apparatus for receiving E-DCH data comprising signaling information according to a second embodiment of the present invention.

Throughout the drawings, the same element is designated by the same reference numeral or character.

## DETAILED DESCRIPTION OF EXEMPLARY EMBODIMENTS

Hereinafter, embodiments according to the present invention will be described with reference to the accompanying drawings. In the following description of the present invention, a detailed description of known functions and configuration incorporated herein will be omitted for conciseness. Terms described in the following description are defined by taking functions thereof into consideration, so they may vary according to the intention of a user and an operator or depending on custom. Accordingly, the terms must be defined based on the entire contents of the present invention.

First, an interface between a UE and a Node B in a wideband code division multiple access (WCDMA) communication system applied to the present invention will be described.

The radio interface between the UE and the Node B is referred to as an Uu interface. The Uu interface includes a control plane used for exchanging a control signal and a user plane used for practically transmitting data.

The control plane includes a Radio Resource Control (RRC) layer, a Radio Link Control (RLC) layer, a MAC layer and a Physical (PHY) layer. The user plane includes a Packet Data Control Protocol (PDCP) layer, a Broadcast/ Multicast Control (BMC) layer, a RLC layer, a MAC layer and a PHY layer. The PHY layer among the layers is located in each Node B or cell and layers from the MAC layer to the RRC layer are located in a Radio Network Controller (RNC). The MAC layer may be located in both the Node B and the RNC according to roles of the MAC layer.

The PHY layer is a layer for providing an information transmission service using a radio transfer technology, which corresponds to a first layer of an Open Systems Interconnection (OSI) model. The PHY layer is connected to the MAC layer through transport channels, and the transport channels are defined by a scheme in which specific data are processed in the PHY layer. The transport channels have characteristics determined by a Transport Format (TF) stipulating a processing scheme such as a convolutional channel encoding scheme, an interleaving scheme and a service-specific rate matching scheme. The transport format of the PHY layer to which multiple transport channels are mapped are represented by a Transport Format Combination Indicator (TFCI) indicating one of multiple available Transport Format Combinations (TFCs).

The MAC layer is connected to the RLC layer through logical channels. The MAC layer transfers data sent from the RLC layer through the logical channel to the PHY layer through a proper transport channel, and transfers data sent from the PHY layer through a transport channel to the RLC layer through a proper logical channel. Further, the MAC layer inserts supplementary information into the data transferred through the logical channel or the transport channel, performs a proper operation after analyzing the inserted supplementary information, and controls a random access operation. In this MAC layer, a part relating to the user plane is referred to as a MAC-d entity and a part relating to the control plane is referred to as a MAC-c entity.

A part taking charge of control of an E-DCH and data transmission through the E-DCH in relation to embodiments of the present invention is referred to as a MAC-e entity. The MAC-e entity is a MAC layer processing the E-DCH between a PHY layer and a MAC-d layer. That is, data of the E-DCH are transferred to the PHY layer through the RLC layer, the MAC-d entity and the MAC-e entity. The data of the E-DCH output from the MAC-e entity are referred to as a MAC-e Protocol Data Unit (PDU). The MAC-e PDU may comprise at least one of user data and signaling information, similarly to PDUs of other dedicated channels. The signaling information representatively comprises scheduling information such as transmit power and buffer status. The signaling information and the scheduling information have the same meaning in the present invention. However, it is noted that the signaling information may further include supplementary information in addition to the scheduling information.

The RLC layer sets and releases the logical channels. The RLC layer may operate in one of three operation modes, that is, an Acknowledge Mode (AM), an Unacknowledge Mode (UM) and a Transparent Mode (TM). The RLC layer provides different functions in each operation mode. In general, the RLC layer segments a Service Data Unit (SDU) transferred from an upper layer into units having a proper size, assembles the segmented units, and corrects an error.

The PDCP layer is located above the RLC layer in the user plane. Further, the PDCP layer compresses and restores a header of transmitted IP packet data, and losslessly transfers data under the situation in which an RNC providing a service to a specific UE changes according to movement of the UE.

As described above, the E-DCH used in the WCDMA communication system supports the HARQ, the AMC, the Node B controlled Scheduling, etc. In scheduled channels, such as the E-DCH, assigning all available resources of a Node B to an optimally selected UE in each time interval, the UE must transfer scheduling information such as transmit power and buffer status of the UE to the Node B in order to efficiently perform the Node B controlled Scheduling. One available method for transferring the scheduling information uses a signaling information transmission function of the E-DCH.

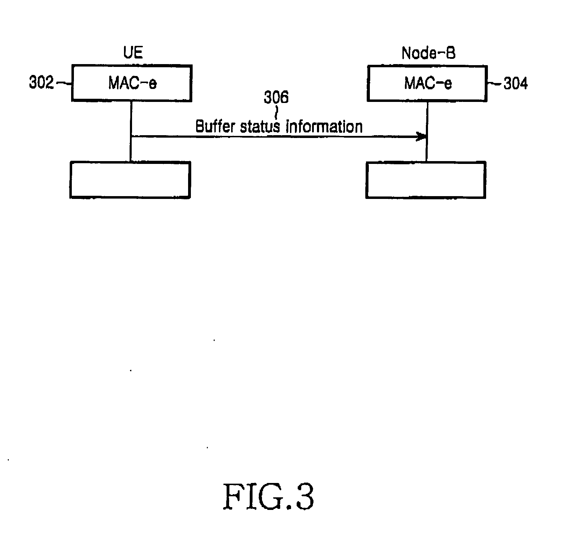

FIG. 3 is a diagram illustrating transmission of buffer information through an E-DCH between a Node B and a UE.

Referring to FIG. 3, a MAC-e entity 302 of the UE generates a MAC-e PDU comprising buffer information 306 and transmits the MAC-e PDU through the E-DCH to the Node B. A MAC-e entity 304 of the Node B reads the buffer information 306 included in the MAC-e PDU and transfers the buffer information 306 so that it can be used by a Node B scheduler. Because the E-DCH supports HARQ technology, when the UE receives a NACK or does not receive an ACK due to an occurrence of an error in transmission of the MAC-e PDU including scheduling information, the UE retransmits the MAC-e PDU including the scheduling information. The retransmitted scheduling information may comprise values measured again in a point in time of the retransmission, or comprise again values transmitted in the initial transmission according to selection by a user.

When the scheduling information is transmitted using a MAC-e layer signaling instead of a PHY layer signaling as described above, the size of information to be transmitted may be variably determined without separately defining a PHY layer slot format, so that it is possible to flexibly support the transmission of the scheduling information. The UE separately stores data having different priorities, that is, requested Quality of Services (QoSs) and sizes, according to types of services in different buffers (priority queues). The UE does not report the statuses of all buffers each scheduling period, and transmits only the status of a buffer receiving data, thereby reducing a signaling overhead. Further, the MAC-e signaling enables power information or other necessary scheduling information to be transmitted in addition to the buffer information.

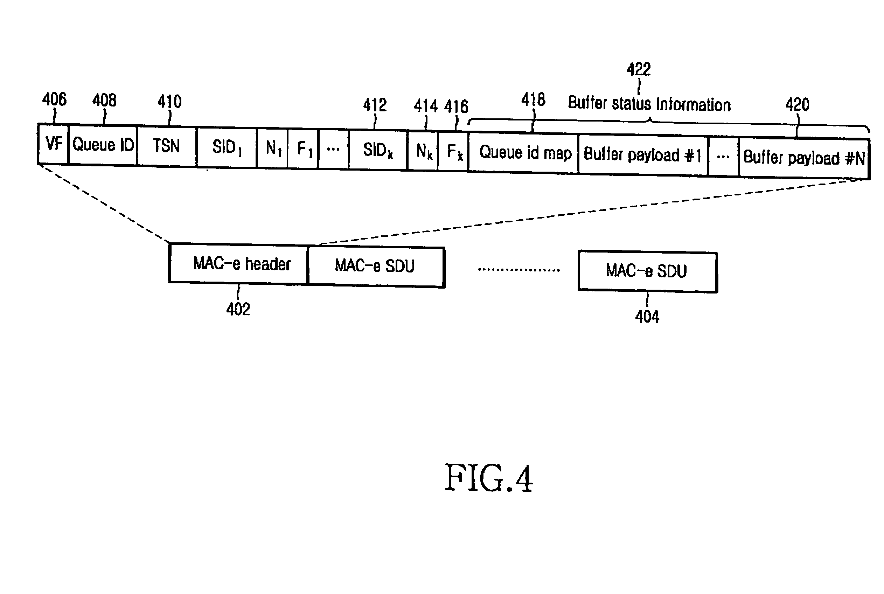

FIG. 4 is a diagram showing the structure of an MAC-e PDU comprising scheduling information required for a Node B controlled Scheduling. Referring to FIG. 4, the MAC-e PDU comprises a MAC-e header 402 and at least one MAC-e SDU 404. The MAC-e SDU 404 indicates E-DCH data to be transmitted. Accordingly, it is noted that the MAC-e header 402 indicates all information other than the E-DCH data instead of information located in the header of the MAC-e PDU. Hereinafter, main parameters included in the MAC-e header 402 will be described.

A version flag 406 is a flag designating an expanded use of a MAC-e PDU format, which is generally set to 0. A queue ID 408 of 3 bits is an identifier of a priority queue of the MAC-e SDU. A Transmission Sequence Number (TSN) 410 is a serial number of 5 to 6 bits used when the MAC-e SDU is reordered in the priority queue. A SID_k 412 is a value of 2 to 3 bits representing sizes of MAC-d SDUs belonging to an $x^{th}$ set of the MAC-e SDU from among sets of MAC-e SDUs comprising the MAC-e PDU. A $N_k$ 414 is a value of 7bits representing the number of the MAC-d SDUs belonging to the $x^{th}$ set of the MAC-e SDU. An $F(flag)_k$ 416 represents that the next field is the MAC-e SDU when the $F(flag)_k$ 416 is set to 1. The $F_k$ 416 represents that the next field is a SID when the $F(flag)_k$ 416 is set to 0.

A queue ID map 418 and a buffer payload 420 represent buffer status information 422. The queue ID map 418 is a map for distinguishing priority queues including data from priority queues not including data, which has the number of bits corresponding to the number of priority queues. In the map 418, 1 represents that data exist and 0 represents that data do not exist. The buffer payload 420 represents size of data stored in the priority queue in which the map 418 has a value of 1. The UE transfers the buffer status information 422 of a priority queue, in which data are received through the MAC-e header 402 as illustrated in FIG. 4, to the Node B.

In the meantime, an E-DCH service supports the HARQ technology in order to improve performance of a channel. In this case, transmit power of packet data is set so that a Block error ratio (BLER) after maximum retransmission can maintain constant quality. When the HARQ is used, an entire magnitude of receive power corresponding to one packet data may be maintained above a determined level only after passing through a soft-combining because a reception side repeatedly receives packet data up to the maximum number of times for transmission, and soft-combines and demodulates multiple packets. This means that most packet data may be transmitted up to the maximum number of times for transmission.

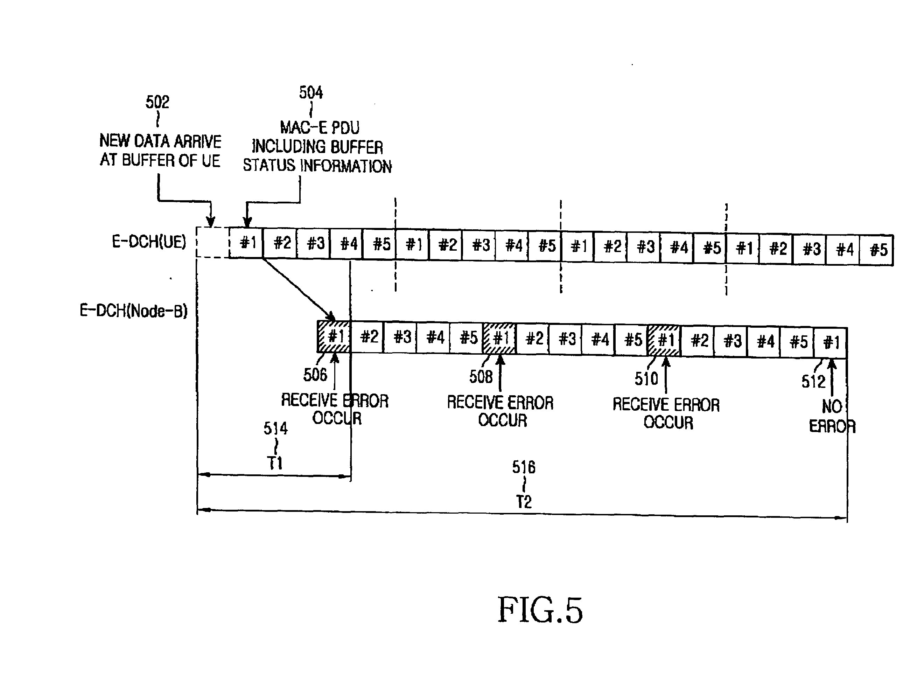

A problem when the MAC-e signaling is performed in this situation will be described with reference to FIG. 5.

Referring to FIG. 5, when data arrives at a buffer of a UE in a point in time 502, the UE reports a buffer status through a MAC-e PDU comprising buffer status information in a point in time 504 in order to receive resources corresponding to a transmittable data rate. A Node B receives the MAC-e PDU including the buffer status information for the first time in a point in time 506. If receive errors continuously occur in points in time 506, 508 and 510 when the MAC-e PDU is transmitted, the buffer status information is normally received in the Node B in a point in time 512.

When a Transmission Time Interval (TTI) of 2 ms is used, five parallel HARQ processes are possible, and the maximum number of times for transmission is four, a maximum delay time for one PDU is longer by a maximum 30 ms as compared with a case of success in receiving scheduling information through one time transmission. In other words, a delay time between a T1 (514) required for receiving the scheduling information through the first transmission and a T2 (516) required for receiving the scheduling information through transmission up to the maximum number of times for transmission may have 30 ms at a maximum.

When the scheduling delay time required for receiving the scheduling information becomes much longer as described above, a point in time at which a scheduling is practically performed does not coincide with the status of the UE. Accordingly, transmission itself may fail. For example, in a case where data received in the buffer of the UE are gaming or streaming data greatly influenced by a delay time, when the UE fails to receive resources from the Node B in realtime, the transmission quality of data may be greatly deteriorated.

In an embodiment of the present invention for solving this problem, when MAC-e signaling information such as scheduling information is inserted into the MAC-e PDU, transmit power of an E-DCH is highly set as compared with transmission of general data, thereby allowing the MAC-e PDU comprising the MAC-e signaling information to be transmitted within a shorter time as compared with a different MAC-e PDU comprising the general data. The general data represents user data, etc., other than signaling information.

When the transmit power of the E-DCH having been set for normal transmission of general packet data is referred to as a P_data, a P_total, which is the transmit power of the E-DCH, is set to be a sum of P_data and P_control in transmitting data including the MAC-e signaling information. The P_control has a positive power level value. This is for increasing the probability of success in receiving the MAC-e PDU including the MAC-e signaling information in the first transmission before transmitting the MAC-e PDU up to the maximum number of times of transmission.

Hereinafter, two embodiments for setting power in order to transmit the MAC-e signaling information will be described.

First embodiment

The first embodiment additionally sets a power offset in a gain factor used for transmitting general E-DCH data.

An initial transmit power level of an Up-link Dedicated Physical Channel (UL-DPCH) is assigned by an upper layer in a RNC and then is adjusted by a power control loop. When a Dedicated Physical Data Channel (DPDCH) and a Dedicated Physical Control Channel (DPCCH) for carrying control information relating to connection and release of the DPDCH are used as the UL-DPCH, a relative transmit power level between the two channels is determined by the gain factor.

The gain factor is calculated by the RNC and may be provided to a UE by an upper layer signaling. Also, the gain factor may be calculated by the UE by means of a basic gain factor value assigned from the RNC. The present embodiment describes in detail a case where the UE calculates the gain factor. However, it is noted that a Node B may calculate the gain factor. That is, the Node B may perform the following procedure in order to understand the power of an E-DCH transmitted from the UE.

A gain factor of a transport channel such as the E-DCH is set according to each Transport Block Size (TBS) so that data having various speeds from a low speed to a high speed can be transmitted. Table 1 below shows an example in which the gain factor is set according to each TBS.

Table 1

| TBS [bit] | gain factor [dB] |
|-----------|------------------|
| 10 | $\beta e\_1$ |
| 50 | $\beta e\_2$ |
| 100 | $\beta e\_3$ |

Table 1 (continued)

| TBS [bit] | gain factor [dB] |
|---|---|
| 200 | βe_4 |

In Table 1, an assigned gain factor has an increased value as the TBS grows larger. When the HARQ is used, the gain factor values βe_1, βe_2, βe_3 and βe_4 in Table 1 are set so that the BLER after soft-combining has been performed for data received in a reception side up to up to the maximum number of times for transmission can be maintained at a proper level.

When the MAC-e signaling information such as the scheduling information has been included in the MAC-e PDU, the gain factor value may be modified as expressed by equation 1 below.

Equation 1

$$\beta e\_x' = \beta e\_x x^{(\Delta\_off/10)}$$

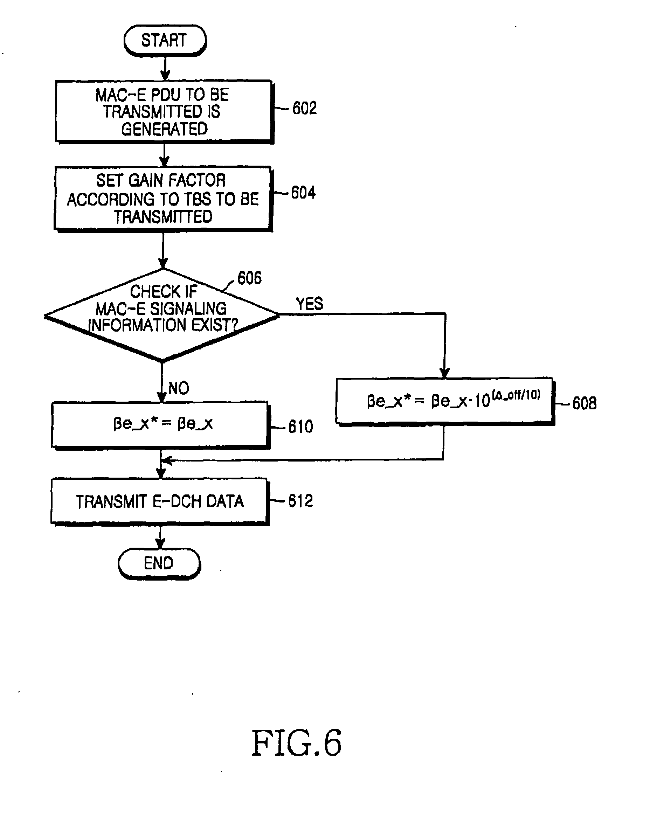

In equation 1, the βe_x represents a preset basic gain factor value corresponding to an $x^{th}$ TBS, and the βe_x' represents a modified gain factor value practically applied. Further, the Δ_off represents a power offset for setting a gain factor of a transport channel for carrying the MAC-e PDU comprising the MAC-e signaling information such as the scheduling information, which is a fixed value set or determined by an upper signaling. FIG. 6 is a flow diagram illustrating a procedure for setting the power of the E-DCH by the UE according to the first embodiment of the present invention. The procedure illustrated in FIG. 6 is performed by the MAC-e entity of the UE. However, for convenience of description, only the UE is referred to.

Referring to FIG. 6, in step 602, the MAC-e PDU to be transmitted is generated. In step 604, the UE sets a basic gain factor according to a TBS of the MAC-e PDU to be transmitted. In the example illustrated in Table 1, when the TBS to be transmitted has a value of 100, the βe_3 is selected. In step 606, the UE determines if the MAC-e signaling information to be transmitted exists, that is, the MAC-e signaling information such as the scheduling information has been included in the MAC-e PDU. If the MAC-e signaling information is not transmitted, the Δ_off has a value of 0 and the UE uses the set basic gain factor value as in step 610. In contrast, if the MAC-e signaling information has been included in the MAC-e PDU, the UE applies the preset Δ_ off to the set basic gain factor value and calculates a fmal gain factor value in step 608. When the gain factor value is determined in steps 608 and 610 as described above, the MAC-e PDU is transmitted with a power level corresponding to the determined gain factor value, in step 612.

The UE may notify the Node B of the gain factor, which is used for transmission of the E-DCH, through a separate PHY layer signaling. In a case where the UE has notified the Node B of the gain factor used for the data transmission in this way, the Node B may perform more exact scheduling because the Node B may exactly estimate power received in the next HARQ processing timing when retransmission for the corresponding data has occurred.

Because the gain factor values of the E-DCH for the same TBS change when the MAC-e PDU does not comprise the MAC-e signaling information or the MAC-e PDU includes the MAC-e signaling information, the UE informs the Node B of a signaling indicator representing if the MAC-e PDU comprises the MAC-e signaling information through the PHY layer signaling. The PHY layer signaling means that the UE uses a channel code different from an Enhanced DPDCH (E-DPDCH) to which the E-DCH is mapped, and transmits the signaling indicator through an Enhanced DPCCH (E-DPCCH) carrying control information for the E-DPDCH. Table 2 below shows the control information relating to the E-DCH transmitted through the PHY layer signaling.

Table 2

| Parameter | Size |
|---|---|
| TBS | 5 bit |
| MAC-e signaling indicator | 1 bit |
| RV | 2 bit |
| NDI | 1 bit |

The PHY layer signaling information as illustrated in Table 2 includes the TBS of the E-DCH, the MAC-e signaling indicator, the Redundancy Version (RV) and the New Data Indicator (NDI) which are HARQ information relating to the E-DCH. As the situation requires, the PHY layer signaling information may further include information for a coding rate and a modulation scheme in relation to a modulation of the E-DCH.

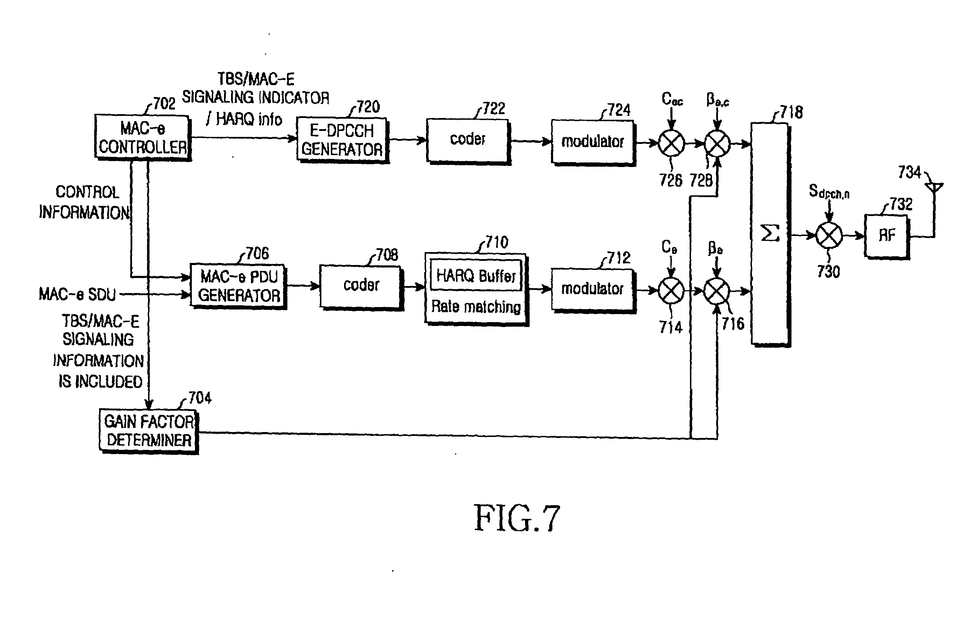

FIG. 7 is a block diagram showing a transmitter of the UE for transmitting the MAC-e PDU including the scheduling information according to the first embodiment of the present invention.

Referring to FIG 7, an MAC-e controller 702 transfers signaling information such as the scheduling information to be transferred through an MAC-e signaling to an MAC-e PDU generator 706. The MAC-e PDU generator 706 provides a MAC-e PDU by combining the signaling information with one or more MAC-e SDUs including E-DCH data. The MAC-e PDU passes through a coder 708, a rate matching unit 710 and a modulator 712, is spread with a spreading code $C_e$ of an E-DPDCH by a spreader 714, and is multiplied by a gain factor $\beta_e$ of an E-DCH in a gain controller 716. The elements 708, 710, 712, 714 and 716 comprise an E-DPDCH transmitter.

The gain factor is determined by a gain factor determiner 704. The gain factor determiner 704 receives the TBS of the E-DCH data and information regarding if MAC-e signaling information is provided from the MAC-e controller 702, determines the final gain factor value according to the procedure of FIG. 6 as described above, and provides the determined gain factor value to the gain controller 716.

In order to transmit a signaling indicator, which represents if the MAC-e PDU including the MAC-e signaling information is transmitted, through a PHY layer signaling, the MAC-e controller 702 provides an E-DPCCH generator 720 with the TBS, the signaling indicator and control information relating to the E-DCH. The E-DPCCH generator 720 generates an E-DPCCH frame including the TBS, the signaling indicator and the control information. The E-DPCCH frame passes through a coder 722 and a modulator 724, is spread with a spreading code $C_{ec}$ of an E-DPCCH by a spreader 726, and is multiplied by a gain factor $\beta_{e,c}$ of the E-DPCCH in a gain controller 728. The elements 720, 722, 724, 726 and 728 comprise an E-DPCCH transmitter.

A multiplexer (MUX) 718 multiplexes signals from the gain controllers 716 and 728, and a scrambler 730 scrambles an output of the multiplexer 718 with a scrambling code $S_{dpch,n}$ corresponding to a DPCH. An output of the scrambler 730 is band-converted into a Radio Frequency (RF) signal by an RF unit 732, and is then transmitted to the Node B through an antenna 734.

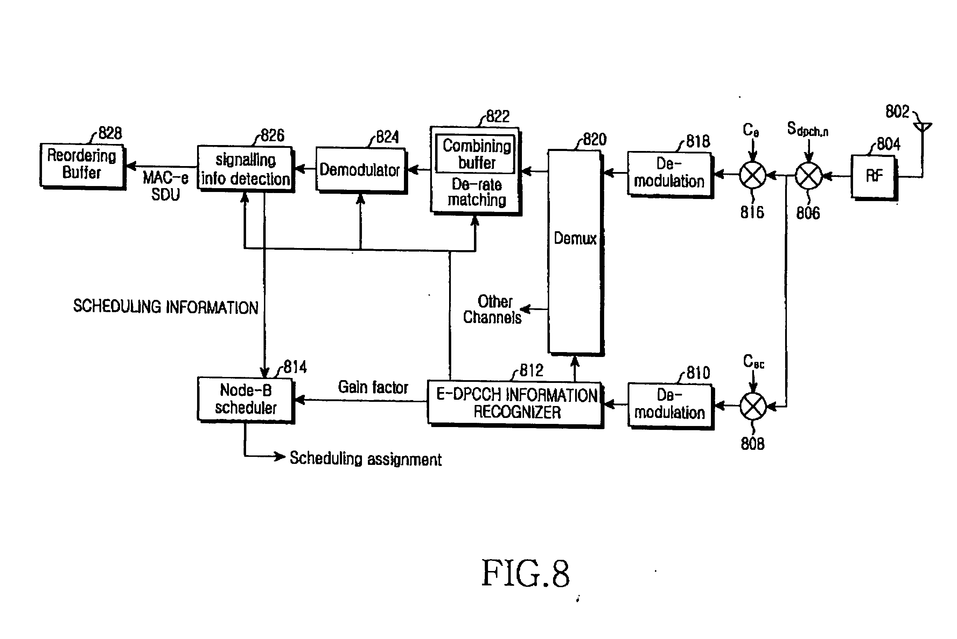

FIG. 8 is a block diagram showing a receiver of the Node B for receiving the MAC-e PDU including the scheduling information according to the first embodiment of the present invention.

Referring to FIG. 8, the signal of the UE, which has been received in an antenna 802 and has been converted into a baseband signal by an RF unit 804, is descrambled with a scrambling code $S_{dpch,n}$ corresponding to the corresponding DPCH by a scrambler 806, and is then provided to despreaders 808 and 816 respectively.

The despreader 808 relating to the E-DPCCH despreades the output signal of the scrambler 806 by means of the spreading code $C_{ec}$ corresponding to the E-DPCCH and transfers the despreaded signal to an E-DPCCH information recognizer 812 through a demodulator 810. The E-DPCCH information recognizer 812 analyzes the information transferred from the demodulator 810, and detects the TBS, the signaling indicator representing if the MAC-e PDU comprises the MAC-e signaling information, additional information relating to an HARQ, and control information required for demodulation of the E-DCH. The E-DPCCH information recognizer 812 determines if the MAC-e PDU comprises the MAC-e signaling information by means of the signaling indicator, recognizes gain factor information corresponding to the TBS according to a result of the determination, and transfers the gain factor information to a Node B scheduler 814. The additional information is provided to elements 822 and 824 relating to the demodulation of the E-DCH.

The despreader 816 relating to the E-DCH despreades the output signal of the scrambler 806 by means of the spreading code $C_e$ corresponding to the E-DCH and transfers the despreaded signal to a demultiplexer 820 through a demodulator 818. When a plurality of E-DCHs are used, the demultiplexer 820 divides E-DCH data. The E-DCH data are input to a signaling information detector 826 through a de-rate matching unit 822 and a demodulator 824.

The signaling information detector 826 detects the MAC-e signaling information from the MAC-e PDU. Herein, the signaling information detector 826 determines if the MAC-e PDU includes the scheduling information, which is the MAC-e signaling information, by means of the signaling indicator received from the E-DPCCH information recognizer 812. If the MAC-e PDU comprises the scheduling information, the signaling information detector 826 transfers the scheduling information included in the MAC-e PDU to the Node B scheduler 814. Further, the MAC-e SDUs included in the MAC-e PDU are stored in a reordering buffer 828 so that the MAC-e SDUs can be reordered in the original order.

The Node B scheduler 814 performs the scheduling by means of the gain factor information received from the E-DPCCH information recognizer 812, the scheduling information received from the signaling information detector 826, and information received from other UEs. As the situation requires, the Node B scheduler 814 transmits the scheduling assignment information.

Second embodiment

The second embodiment sets a different gain factor value according to service priorities of data to be transmitted through the E-DCH. The second embodiment sets a relatively high gain factor or a maximum gain factor, which may be assigned to the E-DCH, for the MAC-e PDU comprising the MAC-e signaling information.

The E-DCH supports a plurality of services, and a requested transmission delay and BLER change according to types of supported services, that is, requested QoS. For example, gaming data for realtime play must be transmitted within a shorter time as compared with a File Transfer Protocol (FTP) data having the same size. In this case, when data corresponding to a gaming service are transmitted with a higher initial transmit power as compared with data corresponding to a FTP service, the average number of times for transmission is reduced as compared with the FTP service. Therefore, it is possible to transmit the data corresponding to the gaming service within a smaller delay time. Accordingly, the following second embodiment of the present invention sets different gain factor values as illustrated in table 3 according to types of services to be transmitted even though data have the same size. That is, the second embodiment sets various gain factor values in one TBS.

Table 3

| TBS [bit] | Tr. Ch. # 1 [dB] | Tr. Ch. #2 [dB] | Tr. Ch. #3 [dB] |
|-----------|------------------|-----------------|-----------------|
| 10 | $\beta e\_1$ | $\beta e\_4$ | $\beta e\_7$ |
| 100 | $\beta e\_2$ | $\beta e\_5$ | $\beta e\_8$ |
| 1000 | $\beta e\_3$ | $\beta e\_6$ | $\beta e\_9$ |

In table 3, the Tr. Ch. #1, #2, #3 represent transport channels supporting different type of services and the $\beta e\_1$ to $\beta e\_9$ represent different gain factor values. That is, the services having different characteristics such as the requested transmission delay and BLER have different gain factor values. Accordingly, the second embodiment of the present invention assigns a larger gain factor value for a transport channel carrying the MAC-e PDU comprising the MAC-e signaling information as compared with other services.

Table 4 below shows one example of gain factor values set according to the second embodiment of the present invention.

Table 4

| TBS [bit] | Tr. Ch. # 1 [dB] | Tr. Ch. #2 [dB] | Tr. Ch. #3 [dB] | Tr. Ch. #4 [dB] (include MAC-e signaling information) |
|-----------|------------------|-----------------|-----------------|-------------------------------------------------------|
| 10 | $\beta e\_1$ | $\beta e\_4$ | $\beta e\_7$ | $\beta e\_10$ |
| 100 | $\beta e\_2$ | $\beta e\_5$ | $\beta e\_8$ | $\beta e\_11$ |
| 1000 | $\beta e\_3$ | $\beta e\_6$ | $\beta e\_9$ | $\beta e\_12$ |

In table 4, the $\beta e\_1$ to $\beta e\_12$ represent different gain factor values and the Tr. Ch. #4 represents a service for carrying the MAC-e PDU comprising the MAC-e signaling information. The gain factor values $\beta e\_10$ to $\beta e\_12$ assigned to the Tr. Ch. #4 have values higher than the gain factor values of other transport channels corresponding to the same TBS. This is for allowing the MAC-e PDU comprising the MAC-e signaling information to be successfully received without retransmission as much as possible.

According to table 4, the MAC-e PDU comprising the MAC-e signaling information is transmitted using the gain factor of the Tr. Ch. #4. When the HARQ is typically applied, a power level required for data having a high priority has a value less than a gain factor value for meeting the BLER requirements of the MAC-e signaling. Accordingly, the gain factor value of the Tr. Ch. #4 is set so that it can meet the BLER requirements of all packet data. The gain factor values $\beta e\_10$ to $\beta e\_12$ may be set to have the same values. That is, the MAC-e PDU comprising the MAC-e signaling information may have a relatively high gain factor regardless of the TBS.

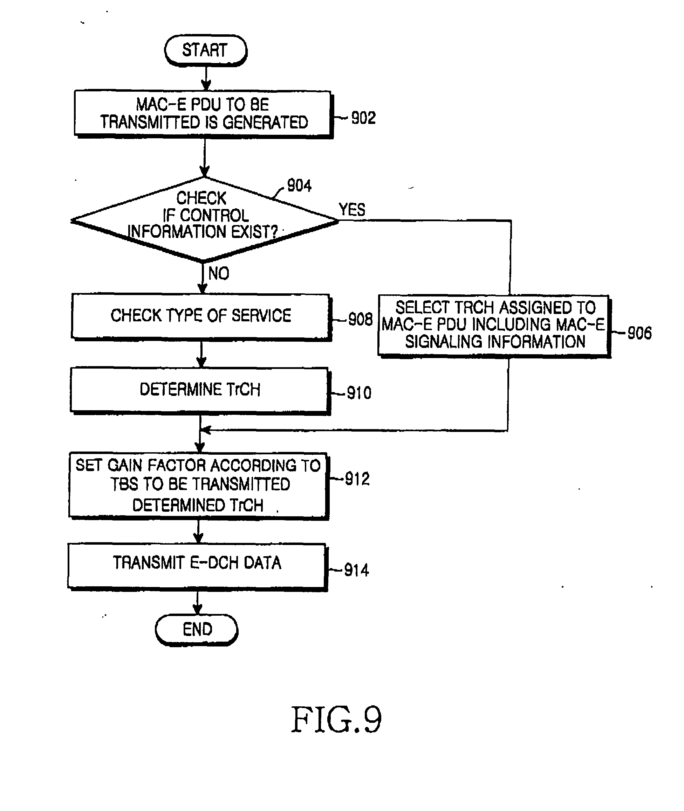

FIG. 9 is a flow diagram showing an operation of the UE for determining the gain factor of the MAC-e PDU including the signaling information according to the second embodiment of the present invention.

Referring to FIG. 9, in step 902, the MAC-e PDU to be transmitted is generated. In step 904, the UE determines if the signaling information to be transmitted exists, that is, the MAC-e signaling information such as the scheduling information has been included in the MAC-e PDU. If the MAC-e signaling information is transmitted, the UE selects a transport channel having a higher priority for transmission of the MAC-e PDU comprising the MAC-e signaling information in step 906. In contrast, If the MAC-e signaling information is not transmitted, the UE checks types of services for the MAC-e PDU in step 908 and selects a transport channel corresponding to the types of the services in step 910. In step 912, the UE selects the gain factor corresponding to the TBS of the MAC-e PDU according to the transport channel selected in steps 906 and 908. In step 914, the MAC-e PDU is transmitted with a power level according to a value of the selected gain factor.

The UE may notify the Node B of information about the gain factor, which has been used for the MAC-e PDU comprising the MAC-e signaling information, through a PHY layer signaling. This is because the Node B may exactly estimate power received in the next HARQ processing timing when retransmission of packet data has occurred. In the second embodiment of the present invention, because different services are transmitted using different gain factor values, gain factor information corresponding to the types of the services must be signaled. For this, the UE notifies the Node B of a transport channel identifier representing types of gain factors of a corresponding transport channel through the PHY layer signaling. Table 5 below shows control information relating to the E-DCH transmitted through the PHY layer signaling according to the second embodiment of the present invention.

Table 5

| Parameter | Size |
|-----------|-------|
| TBS | 5 bit |
| TrCh id | 2 bit |
| RV | 2 bit |
| NDI | 1 bit |

The PHY layer signaling information as illustrated in Table 5 comprises the TBS of the E-DCH, the transport channel identifier (TrCh id) representing types of services for the E-DCH, the RV the NDI which are HARQ information relating to the E-DCH. The types of the services for the E-DCH and the types of the gain factors have the same meaning. As the situation requires, the PHY layer signaling information may further include information for a coding rate and a modulation scheme in relation to a modulation of the E-DCH.

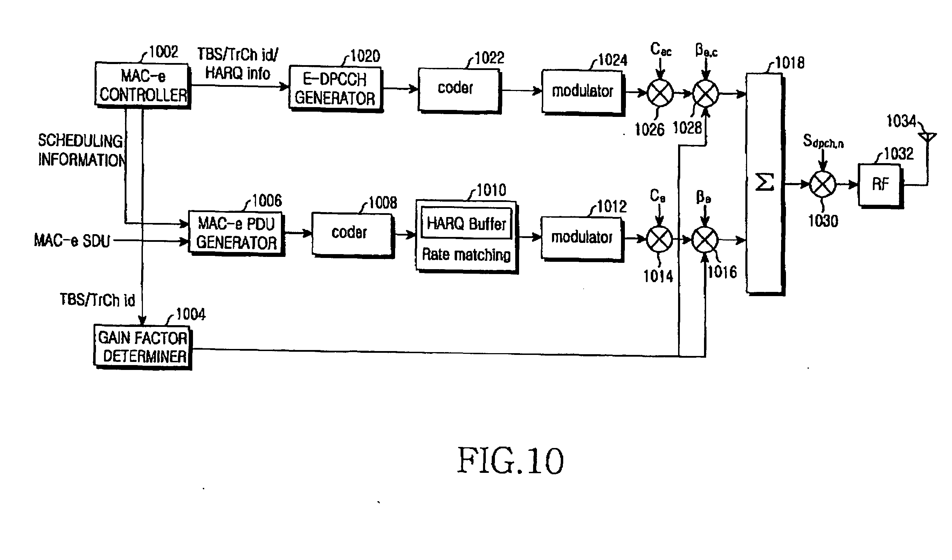

FIG. 10 is a block diagram showing a transmitter of the UE for transmitting the MAC-e PDU including the scheduling information according to the second embodiment of the present invention.

Referring to FIG. 10, a MAC-e controller 1002 transfers signaling information such as the scheduling information to be transmitted through an MAC-e signaling to a MAC-e PDU generator 1006. The MAC-e PDU generator 1006 provides a MAC-e PDU by combining the signaling information with one or more MAC-e SDUs comprising E-DCH data. The MAC-e PDU passes through a coder 1008, a rate matching unit 1010 and a modulator 1012, is spread with a spreading code $C_e$ of an E-DPDCH by a spreader 1014, and is multiplied by a gain factor $\beta_e$ of an E-DCH in a gain controller 1016.

The gain factor is determined by a gain factor determiner 1004. The gain factor determiner 1004 receives the TBS of the E-DCH data and the transport channel identifier from the MAC-e controller 1002, determines a gain factor value corresponding to the TBS and the transport channel identifier, and provides the determined gain factor value to the gain controller 1016.

The MAC-e controller 1002 provides an E-DPCCH generator 1020 with the TBS, the transport channel identifier and control information relating to the E-DCH. The E-DPCCH generator 1020 generates an E-DPCCH frame comprising the TBS, the transport channel identifier and the control information. The E-DPCCH frame passes through a coder 1022 and a modulator 1024, is spread with a spreading code $C_{ec}$ of an E-DPCCH by a spreader 1026, and is multiplied by a gain factor $\beta_{e,c}$ of the E-DPCCH in a gain controller 1028.

A multiplexer (MUX) 1018 multiplexes signals from the gain controllers 1016 and 1028, and a scrambler 1030 scrambles an output of the multiplexer 1018 with a scrambling code $S_{dpch,n}$ corresponding to a DPCH. An output of the scrambler 1030 is band-converted into a RF signal by a RF unit 1032, and is then transmitted to the Node B through an antenna 1034.

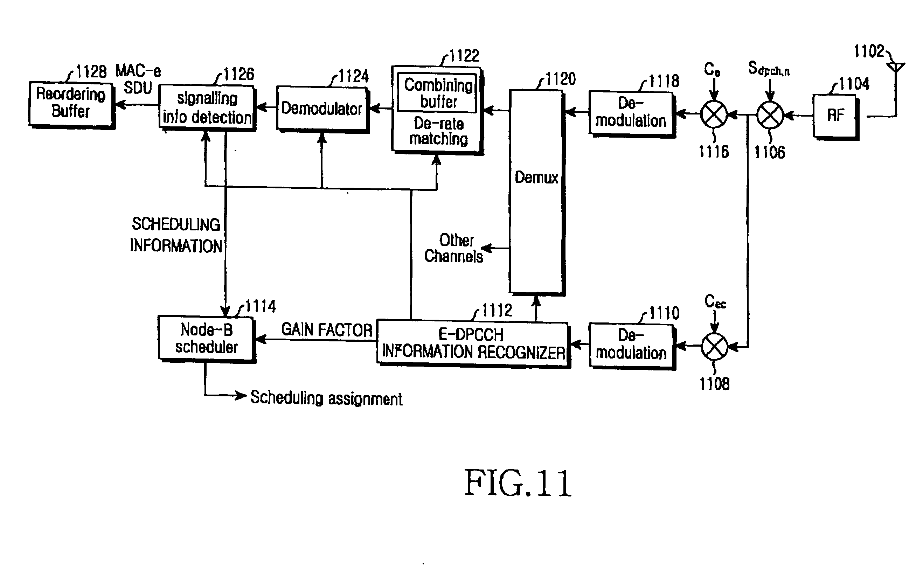

FIG. 11 is a block diagram showing a receiver of the Node B for receiving the MAC-e PDU comprising the scheduling information according to the second embodiment of the present invention.

Referring to FIG 11, the signal of the UE, which has been received in an antenna 1102 and has been converted into a baseband signal by a RF unit 1104, is descrambled with a scrambling code $S_{dpch,n}$ corresponding to a corresponding DPCH by a scrambler 1106, and is then provided to despreaders 1108 and 1116 respectively.

The despreader 1108 relating to the E-DPCCH despreads the output signal of the scrambler 1106 by means of the spreading code $C_{ec}$ corresponding to the E-DPCCH and transfers the despreaded signal to an E-DPCCH information recognizer 1112 through a demodulator 1110. The E-DPCCH information recognizer 1112 analyzes the information transferred from the demodulator 1110, and detects the TBS, the transport channel identifier, additional information relating to an HARQ, and control information required for demodulation of the E-DCH. The E-DPCCH information recognizer 1112 determines types of the gain factors for the E-DCH, through which the MAC-e PDU has been carried, by means of the transport channel identifier, recognizes gain factor information corresponding to the TBS according to a result of the determination, and transfers the gain factor information to a Node B scheduler 1114. The additional information is provided to elements 1120, 1122, 1124 and 1126 relating to the demodulation of the E-DCH.

The despreader 1116 relating to the E-DCH despreades the output signal of the scrambler 1106 by means of the spreading code $C_e$ corresponding to the E-DCH and transfers the despreaded signal to a demultiplexer 1120 through a demodulator 1118. When a plurality of E-DCHs are used, the demultiplexer 1120 divides E-DCH data. The E-DCH data are input to a signaling information detector 1126 through a de-rate matching unit 1122 and a demodulator 1124.

The signaling information detector 1126 detects the MAC-e signaling information from the MAC-e PDU. Herein, the signaling information detector 1126 determines if the MAC-e PDU includes the scheduling information, which is the MAC-e signaling information, by means of the transport channel identifier received from the E-DPCCH information recognizer 1112. The signaling information detector 1126 transfers the scheduling information included in the MAC-e PDU to the Node B scheduler 1114. Further, the MAC-e SDUs included in the MAC-e PDU are stored in a reordering buffer 1128 so that the MAC-e SDUs can be reordered in the original order.

The Node B scheduler 1114 performs the scheduling by means of the gain factor information received from the E-DPCCH information recognizer 1112, the scheduling information received from the signaling information detector 1126, and information received from other UEs. As the situation requires, the Node B scheduler 1114 transmits the scheduling assignment information.

As described above, the present invention reliably transfers MAC-e PDU signaling information including scheduling information for an E-DCH through the E-DCH instead of other PHY channels, thereby transferring the scheduling information while preventing a Peak to Average Ratio (PAR) caused by said other PHY channels from occurring and preventing complexity of a UE from increasing. Further, the present invention transmits the MAC-e PDU signaling information with more higher power as compared with transmission of general data, so that the signaling information can be transmitted without delay, thereby increasing the accuracy of a scheduling by a Node B.

Although a certain embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof. Specifically, in another embodiment of the present invention, when a MAC-e PDU is generated, priority of the MAC-e PDU is determined and a determined power gain for the priority is set. When the MAC-e PDU includes MAC-e PDU signaling information, it is possible to set the power gain again by adding a determined power offset value to the power gain that was set according to the priority.

**Claims**

1. A method for transmitting signaling information for an enhanced uplink packet data service in a communication system, the method comprising the steps of:

   generating a Media Access Control (MAC)-e Protocol Data Unit (PDU) including the signaling information for the enhanced uplink packet data service, for transmitting through an Enhanced Uplink Dedicated Channel (E-DCH);
   applying a determined power offset to a first power gain corresponding to a transport format for transmitting the MAC-e PDU, thereby setting a second power gain; and
   transmitting the MAC-e PDU through the E-DCH by means of the second power gain.

2. The method as claimed in claim 1, wherein the signaling information comprises at least one of buffer status and transmit power status of a user equipment used for a scheduling of the E-DCH.

3. The method as claimed in claim 1, wherein the first power gain is set according to a size of packet data comprising the MAC-e PDU and/or requested Quality of Service (QoS).

4. The method as claimed in claim 3, further comprising a step of transmitting the MAC-e PDU not comprising the signaling information through the E-DCH by means of the first power gain when the MAC-e PDU does not comprise the signaling information.

5. The method as claimed in claim 3, wherein the second power gain is set by adding the power offset to the first power gain according to an equation below,

$$\beta e\_x' = \beta e\_x \times^{(\Delta\_off/10)},$$

wherein the βe_x is a gain factor representing the first power gain corresponding to a Transport Block Size (TBS) of the MAC-e PDU, the βe_x' is a gain factor representing the second power gain, and the Δ_off represents the power offset.

6.  The method as claimed in claim 1, further comprising a step of transmitting a signaling indicator representing if the MAC-e PDU comprises the signaling information through a physical control channel different from the E-DCH.

7.  An apparatus for transmitting signaling information for an enhanced uplink packet data service in a communication system, the apparatus comprising:

    a packet data generator for generating a Media Access Control (MAC)-e Protocol Data Unit (PDU) including the signaling information for the enhanced uplink packet data service, which is to be transmitted through an Enhanced Uplink Dedicated Channel (E-DCH);
    a gain factor determiner for applying a determined power offset to a first power gain corresponding to a transport format for transmitting the MAC-e PDU, thereby setting a second power gain; and
    a data channel transmitter for transmitting the MAC-e PDU through the E-DCH by means of the second power gain.

8.  The apparatus as claimed in claim 7, wherein the signaling information comprises at least one of buffer status and transmit power status of a user equipment used for a scheduling of the E-DCH.

9.  The apparatus as claimed in claim 7, wherein the gain factor determiner sets a gain factor representing the first power gain according to a size of packet data included in the MAC-e PDU and/or requested Quality of Service (QoS).

10. The apparatus as claimed in claim 9, wherein the gain factor determiner provides the first power gain to the data channel transmitter when the MAC-e PDU does not comprise the signaling information.

11. The apparatus as claimed in claim 9, wherein the gain factor determiner sets a gain factor representing the second power gain by adding the power offset to the first power gain according to an equation below, and provides the gain factor representing the second power gain to the data channel transmitter,

$$\beta e\_x' = \beta e\_x \times {}^{(\Delta\_off/10)},$$

wherein the βe_x is a gain factor representing the first power gain corresponding to a Transport Block Size (TBS) of the MAC-e PDU, the βe_x' is a gain factor representing the second power gain, and the Δ_off represents the power offset.

12. The apparatus as claimed in claim 7, further comprising a control channel transmitter for transmitting a signaling indicator representing if the MAC-e PDU comprises the signaling information through a physical control channel different from the E-DCH.

13. A method for receiving signaling information for an enhanced uplink packet data service in a communication system, the method comprising the steps of:

    receiving a Media Access Control (MAC)-e Protocol Data Unit (PDU) through an Enhanced Uplink Dedicated Channel (E-DCH);
    determining if the MAC-e PDU comprises the signaling information;
    detecting the signaling information from the MAC-e PDU when the MAC-e PDU comprises the signaling information; and
    performing a scheduling of the E-DCH by means of the signaling information,

    wherein the MAC-e PDU is received with a first power gain corresponding to a transport format of the E-DCH carrying the MAC-e PDU when the MAC-e PDU does not comprise the signaling information for the uplink packet data service, and the MAC-e PDU is received with a second power gain obtained by adding a determined power offset to the first power gain when the MAC-e PDU includes the signaling information.

**14.** The method as claimed in claim 13, wherein the signaling information comprises at least one of buffer status and transmit power status of a user equipment used for a scheduling of the E-DCH.

**15.** The method as claimed in claim 13, wherein the first power gain is set according to a size of packet data included in the MAC-e PDU and/or requested Quality of Service (QoS).

**16.** The method as claimed in claim 15, wherein the second power gain is set by adding the power offset to the first power gain according to an equation below,

$$\beta e\_x' = \beta e\_x \times^{(\Delta\_off/10)},$$

wherein the $\beta e\_x$ is a gain factor representing the first power gain corresponding to a Transport Block Size (TBS) of the MAC-e PDU, the $\beta e\_x'$ is a gain factor representing the second power gain, and the $\Delta\_off$ represents the power offset.

**17.** The method as claimed in claim 13, further comprising a step of receiving a signaling indicator representing if the MAC-e PDU comprises the signaling information through a physical control channel different from the E-DCH.

**18.** An apparatus for receiving signaling information through an Enhanced Uplink Dedicated Channel (E-DCH) in a communication system, the apparatus comprising:

a data channel receiver for receiving a Media Access Control (MAC)-e Protocol Data Unit (PDU) through the E-DCH;
a signaling information detector for determining if the MAC-e PDU comprises the signaling information and detecting the signaling information from the MAC-e PDU when the MAC-e PDU comprises the signaling information; and
a scheduler for performing a scheduling of the E-DCH by means of the signaling information,

wherein the MAC-e PDU is received with a first power gain corresponding to a transport format of the E-DCH carrying the MAC-e PDU when the MAC-e PDU does not include the signaling information for an uplink packet data service, and the MAC-e PDU is received with a second power gain obtained by applying a power offset to the first power gain when the MAC-e PDU comprises the signaling information.

**19.** The apparatus as claimed in claim 18, wherein the signaling information comprises at least one of buffer status and transmit power status of a user equipment used for scheduling a use of the E-DCH.

**20.** The apparatus as claimed in claim 18, wherein the first power gain is set according to a size of packet data included in the MAC-e PDU and/or requested Quality of Service (QoS).

**21.** The apparatus as claimed in claim 18, wherein the second power gain is set by adding the power offset to the first power gain according to an equation below,

$$\beta e\_x' = \beta e\_x \times^{(\Delta\_off/10)},$$

wherein the $\beta e\_x$ is a gain factor representing the first power gain corresponding to a Transport Block Size (TBS) of the MAC-e PDU, the $\beta e\_x'$ is a gain factor representing the second power gain, and the $\Delta\_off$ represents the power offset.

**22.** The apparatus as claimed in claim 18, further comprising a control channel receiver for receiving a signaling indicator representing if the MAC-e PDU comprises the signaling information through a physical control channel different from the E-DCH, and providing the signaling indicator to the signaling information detector.

**23.** A method for transmitting signaling information for an enhanced uplink packet data service in a communication system, the method comprising the steps of:

generating a Media Access Control (MAC)-e Protocol Data Unit (PDU) to be transmitted through an Enhanced Uplink Dedicated Channel (E-DCH);
setting a power gain corresponding to a transport format of the MAC-e PDU based on Quality of Service (QoS) of the MAC-e PDU; and
transmitting the MAC-e PDU through the E-DCH by means of the set power gain.

24. The method as claimed in claim 23, wherein the MAC-e PDU comprises the signaling information for the enhanced uplink packet data service, and the signaling information comprises at least one of buffer status and transmit power status of a user equipment used for a scheduling of the E-DCH.

25. The method as claimed in claim 23, wherein the step of setting the power gain comprises the steps of:

determining if the MAC-e PDU comprises the signaling information;
selecting a power gain assigned to the QoS for transmitting the signaling information when the MAC-e PDU comprises the signaling information; and
selecting a power gain assigned to a size of packet data included in the MAC-e PDU and requested QoS when the MAC-e PDU does not comprise the signaling information.

26. The method as claimed in claim 23, further comprising a step of transmitting an identifier representing the QoS of the MAC-e PDU through a physical control channel different from the E-DCH.

27. An apparatus for transmitting signaling information for an enhanced uplink packet data service in a communication system, the apparatus comprising:

a packet data generator for generating a Media Access Control (MAC)-e Protocol Data Unit (PDU) to be transmitted through an Enhanced Uplink Dedicated Channel (E-DCH);
a gain factor determiner for setting a power gain corresponding to a transport format of the MAC-e PDU based on Quality of Service (QoS) of the MAC-e PDU; and
a data channel transmitter for transmitting the MAC-e PDU through the E-DCH by means of the set power gain.

28. The apparatus as claimed in claim 27, wherein the MAC-e PDU comprises the signaling information for the enhanced uplink packet data service, and the signaling information comprises at least one of buffer status and transmit power status of a user equipment used for a scheduling of the E-DCH.

29. The apparatus as claimed in claim 27, wherein the gain factor determiner determines if the MAC-e PDU comprises the signaling information, selects a power gain assigned to the QoS for transmitting the signaling information when the MAC-e PDU comprises the signaling information, and selects a power gain assigned to a size of packet data included in the MAC-e PDU and requested QoS when the MAC-e PDU does not include the signaling information.

30. The apparatus as claimed in claim 27, further comprising a control channel transmitter for transmitting an identifier representing the QoS of the MAC-e PDU through a physical control channel different from the E-DCH.

31. A method for receiving signaling information for an enhanced uplink packet data service in a communication system, the method comprising the steps of:

receiving a Media Access Control (MAC)-e Protocol Data Unit (PDU) through an Enhanced Uplink Dedicated Channel (E-DCH);
determining if the MAC-e PDU comprises the signaling information;
detecting the signaling information from the MAC-e PDU when the MAC-e PDU comprises the signaling information; and
performing a scheduling of the E-DCH by means of the signaling information,

wherein the MAC-e PDU corresponds to a transport format of the MAC-e PDU, which is received with a power gain having been set considering QoS of the MAC-e PDU.

32. The method as claimed in claim 31, wherein the signaling information comprises at least one of buffer status and transmit power status of a user equipment used for a scheduling of the E-DCH.

33. The method as claimed in claim 31, wherein the MAC-e PDU has a power gain assigned to the QoS for transmitting the signaling information when the MAC-e PDU comprises the signaling information, and has a power gain assigned to a size of packet data included in the MAC-e PDU and requested QoS when the MAC-e PDU does not comprise the signaling information.

34. The method as claimed in claim 31, further comprising a step of receiving an identifier representing the QoS of the MAC-e PDU through a physical control channel different from the E-DCH.

35. An apparatus for receiving signaling information through an enhanced uplink packet data in a user equipment of a communication system, the apparatus comprising:

a data channel receiver for receiving a Media Access Control (MAC)-e Protocol Data Unit (PDU) through an Enhanced Uplink Dedicated Channel (E-DCH);
a signaling information detector for determining if the MAC-e PDU includes the signaling information and detecting the signaling information from the MAC-e PDU when the MAC-e PDU comprises the signaling information; and
a scheduler for performing a scheduling of the E-DCH by means of the signaling information,

wherein the MAC-e PDU corresponds to a transport format of the MAC-e PDU, which is received with a power gain that was set based on a QoS of the MAC-e PDU.

36. The apparatus as claimed in claim 35, wherein the signaling information comprises at least one of buffer status and transmit power status of a user equipment used for a scheduling of the E-DCH.

37. The apparatus as claimed in claim 35, wherein the MAC-e PDU has a power gain assigned to the QoS for transmitting the signaling information when the MAC-e PDU comprises the signaling information, and has a power gain assigned to a size of packet data included in the MAC-e PDU and requested QoS when the MAC-e PDU does not comprise the signaling information.

38. The apparatus as claimed in claim 35, further comprising a control channel receiver for receiving an identifier representing the QoS of the MAC-e PDU through a physical control channel different from the E-DCH, and providing the identifier to the signaling information detector.

FIG.1

E-DCH Setup ⟋202

Scheduling information ⟋204

NODE B PERFORM SCHEDULING USING SCHEDULING INFORMATION RECEIVED FROM UES ⎯206

SCHEDULING ASSIGNMENT INFORMATION ⟋208

UE DETERMINE TF OF E-DCH BASED ON SCHEDULING ASSIGNMENT INFORMATION RECEIVED FROM NODE B ⎯210

TF-RELATED INFORMATION ⟋212

UL Packet data transmission using E-DCH ⟋214

DETERMINE IF ERROR EXIST IN RECEIVED INFORMATION/ CREATE ACK/NACK INFORMATION ⎯216

ACK/NACK ⟋218

Node B

FIG.2

FIG.3

| VF | Queue ID | TSN | SID$_1$ | N$_1$ | F$_1$ | ... | SID$_k$ | N$_k$ | F$_k$ | Queue id map | Buffer payload #1 | ... | Buffer payload #N |
|----|----------|-----|---------|-------|-------|-----|---------|-------|-------|--------------|-------------------|-----|-------------------|

406   408   410   412   414   416   418   Buffer status Information   422   420

| MAC-e header | MAC-e SDU | .................. | MAC-e SDU |
|--------------|-----------|-------------------|-----------|

402      404

FIG.4

FIG.5

START

MAC-E PDU TO BE
TRANSMITTED IS
GENERATED — 602

SET GAIN FACTOR
ACCORDING TO TBS TO BE
TRANSMITTED — 604

CHECK IF
MAC-E SIGNALING
INFORMATION EXIST? — 606

YES

NO

$\beta e\_x^* = \beta e\_x \cdot 10^{(\Delta\_off/10)}$ — 608

$\beta e\_x^* = \beta e\_x$ — 610

TRANSMIT E-DCH DATA — 612

END

# FIG.6

FIG.7

EP 1 594 267 A2

FIG.8

START

MAC-E PDU TO BE
TRANSMITTED IS GENERATED — 902

CHECK
IF CONTROL
INFORMATION EXIST? — 904 — YES

NO

CHECK TYPE OF SERVICE — 908

SELECT TRCH ASSIGNED TO
MAC-E PDU INCLUDING MAC-E — 906
SIGNALING INFORMATION

DETERMINE TrCH — 910

SET GAIN FACTOR ACCORDING TO
TBS TO BE TRANSMITTED — 912
DETERMINED TrCH

TRANSMIT E-DCH DATA — 914

END

FIG.9

FIG.10

FIG.11

EP 1 594 267 A2